# EUROPÄISCHE PATENTSCHRIFT

(11) **EP 3 052 353 B1**
(45) Veröffentlichungstag und Bekanntmachung des Hinweises auf die Patenterteilung: **08.07.2020**
(21) Anmeldenummer: 14780451.2
(22) Anmeldetag: 30.09.2014
(51) Int. Cl.: B60W 30/12, B60W 30/16, B60K 35/00, B60W 50/00, B60W 50/14, G05D 1/00

(54) **VERFAHREN FÜR EIN FAHRERASSISTENZSYSTEM EINES FAHRZEUGS**
METHOD FOR A DRIVER ASSISTANCE SYSTEM OF A VEHICLE
PROCÉDÉ AFFÉRENT À UN SYSTÈME D'AIDE À LA CONDUITE D'UN VÉHICULE

(30) Priorität: 01.10.2013 DE 102013110852
(43) Veröffentlichungstag der Anmeldung: 10.08.2016
(73) Patentinhaber: Volkswagen AG, 38436 Wolfsburg (DE)
(72) Erfinder: BENDEWALD, Lennart, 38442 Wolfsburg (DE); HACKENBERG, Linn, 38440 Wolfsburg (DE); LÜDDECKE, Daniel, 39108 Magdeburg (DE)
(74) Vertreter: Sticht, Andreas
(86) Internationale Anmeldenummer: PCT/EP2014/070922
(87) Internationale Veröffentlichungsnummer: WO 2015/049231

(56) Entgegenhaltungen:
- DE-A1- 10 355 462
- DE-A1-102006 053 499
- DE-A1-102010 001 579
- DE-A1-102011 082 398
- DE-A1-102011 101 541
- DE-A1-102012 002 581
- US-A- 5 774 069
- US-A1- 2013 002 416

## Beschreibung

Die vorliegende Erfindung betrifft ein Verfahren für ein Fahrerassistenzsystem eines Fahrzeugs, insbesondere für ein Fahrerassistenzsystem, welches in der Lage ist, das Fahrzeug zumindest teilweise automatisch zu steuern. Derartige Funktionen eines Fahrerassistenzsystems werden auch als Autopilotfunktion bezeichnet. Die vorliegende Erfindung betrifft insbesondere eine Informationsausgabe, welche die Autopilotfunktion oder deren Ankündigung betrifft. Die vorliegende Erfindung betrifft weiterhin ein Fahrerassistenzsystem, welches zur Durchführung des Verfahrens geeignet ist.

Moderne oder zukünftige Fahrzeuge, wie z.B. Personenkraftwagen oder Lastkraftwagen, werden zunehmend mit Fahrerassistenzsystemen ausgestattet, welche ein teilweises oder vollautomatisches Fahren des Fahrzeugs ermöglichen. Diese Systeme können unter bestimmten Bedingungen sowohl die Querführung als auch die Längsführung des Fahrzeugs eigenständig übernehmen. Ein Fahrer des Fahrzeugs muss dabei diese automatische Führung des Fahrzeugs, welche auch als Autopilotfunktion bezeichnet wird, nicht dauerhaft überwachen, sondern kann zu einem geeigneten Zeitpunkt die Führung des Fahrzeugs an die Autopilotfunktion übergeben oder zurückholen.

In diesem Zusammenhang wird in der DE 197 43 024 A1 ein Kraftfahrzeug mit autonomer Fahrzeugführung und elektronischen Kommunikationsmitteln offenbart. In dem Fahrzeug ist eine Bedieneinrichtung vorgesehen, durch welche die Kommunikationsmittel zwecks Durchführung eines Kommunikationsvorgangs und die Fahrzeugführungsmittel zwecks autonomer Fahrzeugführung aktivierbar sind. Die aktivierten Fahrzeugführungsmittel übermitteln bei Erkennen einer erforderlich werdenden manuellen Fahrzeugführung eine Übernahmeinformation an die Kommunikationsmittel, welche diese Übernahmeinformation an einer Anzeigeeinrichtung anzeigen.

Die DE 10 2007 039 375 B4 betrifft ein Kraftfahrzeug mit einem Fahrerassistenzsystem mit einer Stop & Go-Funktion. Das Fahrerassistenzsystem stellt eine Längsführung des Fahrzeugs bereit und umfasst eine Erfassungsvorrichtung zum Erfassen von Informationen, welche ein vorausfahrendes Fahrzeug betreffen. In Abhängigkeit von der mittels der Erfassungsvorrichtung erfassten Informationen kann das Fahrerassistenzsystem das Kraftfahrzeug automatisch in den Stand abbremsen und bei Erfassung einer erneuten Anfahrt des vorausfahrenden Fahrzeugs in Abhängigkeit von einem von einem Fahrer über eine Eingabeeinrichtung gebbaren Betätigungssignal automatisch wieder anfahren.

Die DE 10 2010 001 579 A1 betrifft ein Fahrerassistenzsystem für ein Fahrzeug mit einer Einrichtung zur Umgebungserfassung und einer Einrichtung zum Erfassen einer aktuellen Fahrsituation. Das Fahrerassistenzsystem berechnet einen vorausliegenden Straßenabschnitt, bei welchem ein automatisches Fahren möglich ist und ein Fahrer daher eine Nebenaufgabe durchführen kann. Das Fahrerassistenzsystem teilt dem Fahrer mit, wie lange es voraussichtlich dauern wird, bis dieser Streckenabschnitt erreicht ist, und weist ihn optisch oder akustisch darauf hin, wann die Zeit gekommen ist, sich der Nebenaufgabe zu widmen.

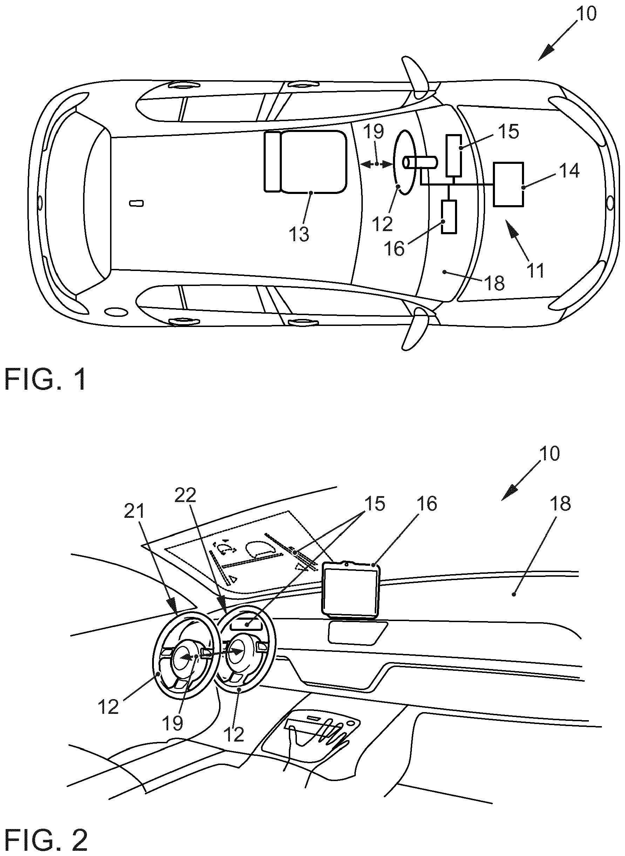

Die DE 10 2011 082 398 A1 betrifft ein Verfahren zur Nutzung eines Fahrerassistenzsystems. Die Verfügbarkeit von Fahrassistenzsystemen kann beispielsweise von der Verfügbarkeit von Zusatzinformationen abhängen. In diesem Fall ist es sinnvoll, einem Fahrer die Streckenabschnitte der Fahrroute anzuzeigen, in denen die benötigten Zusatzinformationen vorliegen, und in denen das Fahrerassistenzsystem verfügbar ist. Diese Informationen können beispielsweise bei einer vollautomatischen Fahrfunktion wie dem automatischen Fahren von besonderem Interesse sein. Figur 2 zeigt eine schematische Darstellung einer Anzeigeeinheit. Auf der Anzeigeeinheit wird eine Straßenkarte mit der zu befahrenden Fahrroute dargestellt. Die Position des Fahrzeugs ist mit einem X gekennzeichnet. Auf der Fahrroute sind Streckenabschnitte der Fahrroute verbreitert dargestellt, in denen eine Zusatzinformation für ein Fahrerassistenzsystem bereitgestellt ist.

Eine vollautomatische Fahrzeugführung durch eine Autopilotfunktion ist derzeit für die meisten Fahrzeugbenutzer eine neue Erfahrung und ungewohnte Funktionalität, sodass eine klare Trennung zwischen manueller Fahrt durch den Fahrer des Fahrzeugs und der automatischen Fahrzeugführung durch die Autopilotfunktion wünschenswert ist. Ferner kann zu der Akzeptanz einer Autopilotfunktion beitragen, dass dem Fahrer detaillierte und geeignete Informationen der Systemaktivität der Autopilotfunktion bereitgestellt werden.

Diese Aufgaben werden gemäß der vorliegenden Erfindung durch ein Verfahren für ein Fahrerassistenzsystem eines Fahrzeugs nach Anspruch 1 und ein Fahrerassistenzsystem für ein Fahrzeug nach Anspruch 12 gelöst. Die abhängigen Ansprüche definieren bevorzugte und vorteilhafte Ausführungsformen der Erfindung.

Im Zusammenhang mit der vorliegenden Erfindung wird der Begriff Autopilotfunktion oder kurz Autopilot verwendet werden. Die Autopilotfunktion betrifft eine Funktion eines Fahrerassistenzsystems, welche in der Lage ist, das Fahrzeug zumindest in bestimmten Situationen oder auf bestimmten Straßen, wie zum Beispiel Autobahnen oder Landstraßen, automatisch zu steuern. D.h., die Autopilotfunktion übernimmt die Längsführung und/oder die Querführung des Fahrzeugs und steuert das Fahrzeug ohne Eingreifen oder Zutun des Fahrers. Die Steuerung des Fahrzeugs mit Hilfe der Autopilotfunktion wird auch als hochautomatisiertes Fahren oder autonomes Fahren bezeichnet.

Gemäß der vorliegenden Erfindung wird ein Verfahren für ein Fahrerassistenzsystem in einem Fahrzeug bereitgestellt. Das Fahrerassistenzsystem ist in der Lage, das Fahrzeug zumindest teilweise automatisch zu steuern. Beispielsweise kann das Fahrerassistenzsystem das Fahrzeug auf einigen Streckenabschnitten entlang einer geplanten Route vollautomatisch steuern, z.B. auf Autobahnabschnitten oder Landstraßenabschnitten. Das automatische Steuern kann beispielsweise eine automatische Längsführung und eine automatische Querführung des Fahrzeugs umfassen. Bei dem Verfahren wird ein Beginn eines Autopilotstreckenabschnitts in einem für das Fahrzeug geplanten Streckenverlauf bestimmt. Der geplante Streckenverlauf kann beispielsweise von einem Navigationssystem des Fahrzeugs vorgegeben sein. In dem Autopilotstreckenabschnitt ist das Fahrerassistenzsystem in der Lage, das Fahrzeug automatisch zu steuern. Bei dem Verfahren wird weiterhin ein Abstand zwischen einer aktuellen Position des Fahrzeugs und dem Beginn des Autopilotstreckenabschnitts bestimmt. Dieser Abstand wird in dem Fahrzeug an einen Fahrer ausgegeben. Durch das Ausgeben des Abstands zu dem Beginn des Autopilotstreckenabschnitts wird einem Fahrer des Fahrzeugs auf einfache Art und Weise dargestellt, wann die Autopilotfunktion verfügbar sein wird. Dadurch kann der Fahrer einschätzen, wann er die Führungsaufgabe an das Fahrzeug übergeben kann und sich einer anderen Tätigkeit zuwenden kann, beispielsweise einem Telefonat oder einem Studium von Dokumenten, wie z.B. E-Mails. Das Ausgeben des Abstands umfasst ein Ausgeben eines Ringsymbols, welches ein gefärbtes oder markiertes Ringsegment aufweist, dessen Ausdehnung in Abhängigkeit von dem Abstand zwischen der aktuellen Position des Fahrzeugs und dem Beginn des Autopilotstreckenabschnitts eingestellt wird.

Gemäß einer Ausführungsform wird der Abstand auf einer Anzeigevorrichtung in dem Fahrzeug ausgegeben. Der Abstand kann beispielsweise zusätzlich in Textform ausgegeben werden. Die Textform kann beispielsweise eine Entfernung in Kilometern bis zum Beginn des Autopilotstreckenabschnitts angeben. Alternativ oder zusätzlich kann eine voraussichtliche Fahrzeit zu dem Beginn des Autopilotstreckenabschnitts bestimmt werden. Diese voraussichtliche Fahrzeit kann beispielsweise aus dem Abstand und einer typischen Verkehrssituation bis zu dem Beginn des Autopilotstreckenabschnitts bestimmt werden. Die so bestimmte voraussichtliche Fahrzeit zu dem Beginn des Autopilotstreckenabschnitts kann beispielsweise in Textform auf der Anzeigevorrichtung ausgegeben werden. Die Textform kann beispielsweise eine Zeitangabe in Minuten oder in Minuten und Sekunden umfassen. Alternativ oder zusätzlich kann ein Symbol auf der Anzeigevorrichtung ausgegeben werden, welches die voraussichtliche Fahrzeit oder den Abstand symbolisch darstellt. Beispielsweise kann das Symbol einen Balken umfassen, welcher sich mit verringerndem Abstand oder verringernder voraussichtlicher Fahrzeit verkürzt. Alternativ oder zusätzlich kann eine graphische Darstellung des geplanten Streckenverlaufs angezeigt werden. In der graphischen Darstellung des geplanten Streckenverlaufs kann der Abstand bis zu dem Beginn des Autopilotstreckenabschnitts graphisch markiert sein, beispielsweise indem eine Route bis zu dem Beginn des Autopilotstreckenabschnitts mit einer vorgegebenen Farbe markiert wird. In der graphischen Darstellung kann der Streckenverlauf auch abstrahiert, z.B. als eine gerade Strecke, dargestellt werden. Alternativ oder zusätzlich sind auch akustische Ausgaben möglich, beispielsweise kann der Abstand als Sprachinformation über ein Audiosystem des Fahrzeugs in Form eines Countdowns heruntergezählt werden. Die zuvor beschriebenen Ausgaben stellen dem Fahrzeugführer somit detaillierte, hilfreiche, aber dennoch einfach und schnell erfassbare Informationen zur Verfügbarkeit des Autopiloten in geeigneter Art und Weise zur Verfügung.

Bei einer weiteren Ausführungsform wird eine Länge des Autopilotstreckenabschnitts bestimmt und die Länge des Autopilotstreckenabschnitts ausgegeben. Durch die Ausgabe der voraussichtlichen Länge des Autopilotstreckenabschnitts kann der Fahrer einschätzen, wie lange er sich während des Autopilotstreckenabschnitts einer anderen Aufgabe widmen kann. Beispielsweise kann der Fahrer dementsprechend eine Aufgabe auswählen, welche er voraussichtlich während des nächsten Autopilotstreckenabschnitts vollständig bewältigen kann. Ähnlich wie bei der Ausgabe des Abstands zu dem Beginn des Autopilotstreckenabschnitts, kann auch die Länge des Autopilotstreckenabschnitts in Textform als Kilometerangabe, in Textform als eine voraussichtliche Autopilotfahrzeit, als Symbol oder als graphische Darstellung des geplanten Streckenverlaufs mit dem darin markierten Autopilotstreckenabschnitt ausgegeben werden.

Bei einer weiteren Ausführungsform weist das Fahrerassistenzsystem eine Autopilotfunktion auf, welche zum automatischen Steuern des Fahrzeugs entlang dem Autopilotstreckenabschnitt von einem Fahrer aktivierbar ist. In Abhängigkeit eines Aktivierungszustands der Autopilotfunktion wird die Länge des Autopilotstreckenabschnitts auf einer ersten Anzeigevorrichtung in dem Fahrzeug oder auf einer zweiten Anzeigevorrichtung in dem Fahrzeug ausgegeben. Beispielsweise kann die Länge des Autopilotstreckenabschnitts bei nicht aktivierter Autopilotfunktion auf der ersten Anzeigevorrichtung, beispielsweise einer Anzeigevorrichtung in einem Kombiinstrument in einem Bereich hinter einem Lenkrad des Fahrzeugs angezeigt werden, und bei aktivierter Autopilotfunktion auf der zweiten Anzeigevorrichtung, beispielsweise auf einer zusätzlichen Anzeigevorrichtung, welche in einem mittleren Bereich des Armaturenbretts des Fahrzeugs angeordnet ist. Solange der Fahrer die Autopilotfunktion nicht aktiviert hat und somit das Fahrzeug selbst steuert, wird in der ersten Anzeigevorrichtung im Kombiinstrument angezeigt, ob und für wie lange die Autopilotfunktion verfügbar ist. Der Fahrer kann anhand dieser Information entscheiden, ob er die Fahrzeugführung an die Autopilotfunktion abgeben möchte oder das Fahrzeug weiterhin selbst steuert. Wenn der Fahrer die Fahrzeugführung an die Autopilotfunktion abgibt, wird die Länge des Autopilotstreckenabschnitts auf der zweiten Anzeigevorrichtung dargestellt. Dadurch ist eine klare Trennung der Fahrzeugführung durch den Fahrer oder die Autopilotfunktion optisch gegeben. Darüber hinaus können weitere Insassen des Fahrzeugs anhand der Darstellung der Länge des Autopilotstreckenabschnitts auf der zweiten Anzeigevorrichtung leicht erkennen, dass das Fahrzeug von der Autopilotfunktion gesteuert wird und es daher dem Fahrer erlaubt ist, sich einer anderen Beschäftigung zuzuwenden.

Bei einer weiteren Ausführungsform wird ein zukünftiges Fahrmanöver, welches von dem Fahrerassistenzsystem beim automatischen Steuern des Fahrzeugs geplant wird, auf einer Anzeigevorrichtung in dem Fahrzeug dargestellt. Das zukünftige Fahrmanöver kann beispielsweise einen Spurwechsel, ein Abbiegen, ein Abbremsen oder ein Beschleunigen des Fahrzeugs umfassen. Insbesondere wenn das Fahrzeug von der Autopilotfunktion automatisch gesteuert wird, kann durch das Anzeigen der zukünftigen Fahrmanöver auf der Anzeigevorrichtung, insbesondere auf der zweiten Anzeigevorrichtung, die Akzeptanz der Verwendung der Autopilotfunktion durch einen Fahrer des Fahrzeugs oder durch die Insassen des Fahrzeugs erhöht werden. Durch die Darstellung der zukünftigen Fahrmanöver auf der gesonderten zweiten Anzeigevorrichtung können insbesondere ein Beifahrer und weitere Insassen des Fahrzeugs intuitiv und einfach erkennen, dass das Fahrzeug von der Autopilotfunktion gesteuert wird.

Zusätzlich kann eine Verkehrssituation rund um das Fahrzeug, wie sie von dem Fahrerassistenzsystem zum automatischen Steuern des Fahrzeugs erfasst wird, bestimmt werden und auf einer Anzeigevorrichtung des Fahrzeugs, insbesondere auf der zweiten Anzeigevorrichtung, beispielsweise in Verbindung mit den zukünftigen Fahrmanövern, dargestellt werden. Durch die Darstellung der Umgebungsinformationen kann das Vertrauen, welches von einem Fahrer und den Passagieren des Fahrzeugs der Autopilotfunktion entgegenzubringen ist, erhöht werden, indem das Fahrerassistenzsystem klar darstellt, welche Umgebungsinformationen erfasst und somit berücksichtigt werden. Darüber hinaus kann ein Fahrer durch einen Blick auf die Anzeigevorrichtung einen Überblick über die aktuelle Verkehrssituation erhalten, was bei einem Zurückholen der Fahrverantwortung zu dem Fahrer vorteilhaft sein kann.

Gemäß einer Ausführungsform wird das zukünftige Fahrmanöver oder die Verkehrssituation rund um das Fahrzeug in Abhängigkeit des Aktivierungszustands der Autopilotfunktion wahlweise auf der ersten Anzeigevorrichtung oder auf der zweiten Anzeigevorrichtung ausgegeben. Beispielsweise können zukünftige Fahrmanöver und die Verkehrssituation rund um das Fahrzeug bei ausgeschalteter Autopilotfunktion auf der ersten Anzeigevorrichtung im Kombiinstrument des Fahrzeugs angezeigt werden und bei eingeschaltetem Autopilot auf der zweiten Anzeigevorrichtung im mittleren Bereich des Armaturenbretts. Dadurch kann ein Fahrer bei ausgeschalteter Autopilotfunktion beurteilen, ob die Autopilotfunktion die Verkehrssituation ausreichend erfasst, wodurch das Vertrauen in die Autopilotfunktion erhöht werden kann. Bei aktivierter Autopilotfunktion können Fahrer und weitere Insassen des Fahrzeugs die Arbeitsweise der Autopilotfunktion mitverfolgen und beurteilen, wodurch wiederum Vertrauen in die Autopilotfunktion gebildet werden kann oder ein Fahrer ggf. schnell in die Fahrzeugführung eingreifen kann.

Bei einer weiteren Ausführungsform der vorliegenden Erfindung wird bestimmt, ob sich das Fahrzeug auf dem Autopilotstreckenabschnitt befindet. Wenn sich das Fahrzeug auf dem Autopilotstreckenabschnitt befindet und die Autopilotfunktion nicht aktiviert ist, wird ein Hinweis ausgegeben, wie die Autopilotfunktion aktiviert werden kann bzw. zu aktivieren ist. Der Hinweis kann beispielsweise eine elektronisch eingeblendete Hinweistafel in einer Anzeige in dem Kombiinstrument des Fahrzeugs sein. Der Hinweis kann beispielsweise eine bildliche Darstellung umfassen, welche Bedienelemente des Fahrzeugs zeigt, die zum Aktivieren der Autopilotfunktion zu betätigen sind. Alternativ oder zusätzlich kann ein akustischer Hinweis ausgegeben werden. Um ein versehentliches Aktivieren und Deaktivieren der Autopilotfunktion zu vermeiden, sind üblicherweise Bedienschritte mit einer gewissen Komplexität erforderlich, um die Autopilotfunktion zu aktivieren oder zu deaktivieren. Beispielsweise kann es erforderlich sein, mehrere Betätigungselemente an einem Lenkrad des Fahrzeugs gleichzeitig zu betätigen und/oder das Lenkrad in eine bestimmte Position, beispielsweise in Richtung des Armaturenbretts oder in Richtung des Fahrers, zu bewegen. Um einem nicht geübten Fahrer die Verwendung der Autopilotfunktion zu erleichtern, können entsprechende Hinweise ausgegeben werden, wodurch die Akzeptanz der Autopilotfunktion erhöht werden kann.

Bei einer weiteren Ausführungsform wird ein Ende des Autopilotstreckenabschnitts in dem für das Fahrzeug geplanten Streckenverlauf bestimmt. Ferner wird ein Abstand zwischen der aktuellen Position des Fahrzeugs und dem Ende des Autopilotstreckenabschnitts bestimmt. Wenn das Fahrzeug mit aktivierter Autopilotfunktion entlang dem Autopilotstreckenabschnitt betrieben wird, wird in Abhängigkeit von dem Abstand zwischen der aktuellen Position des Fahrzeugs und dem Ende des Autopilotstreckenabschnitts ein Hinweis ausgegeben, die Autopilotfunktion zu deaktivieren. Beispielsweise kann der Hinweis einige 100 Meter vor dem Ende des Autopilotstreckenabschnitts oder eine bestimmte Zeit von beispielsweise 30 Sekunden vor dem Ende des Autopilotstreckenabschnitts ausgegeben werden. Der Hinweis kann genauere Bedienhinweise umfassen, welche den Fahrer anleiten, wie die Autopilotfunktion zu deaktivieren ist. Zusätzlich kann der Hinweis beispielsweise einen Zähler in Form eines Countdowns umfassen, welcher den verbleibenden Abstand zwischen der aktuellen Position des Fahrzeugs und dem Ende des Autopilotstreckenabschnitts angibt. Dadurch kann ein Fahrer des Fahrzeugs rechtzeitig zur Übernahme der Fahrverantwortung aufgefordert werden.

Gemäß der vorliegenden Erfindung wird weiterhin ein Fahrerassistenzsystem für ein Fahrzeug bereitgestellt. Das Fahrerassistenzsystem ist in der Lage, das Fahrzeug zumindest teilweise automatisch zu steuern. Das Fahrerassistenzsystem umfasst eine Ausgabevorrichtung und eine Verarbeitungsvorrichtung. Die Verarbeitungsvorrichtung ist in der Lage, einen Beginn eines Autopilotstreckenabschnitts in einem für das Fahrzeug geplanten Streckenverlauf zu bestimmen. Das Fahrerassistenzsystem kann das Fahrzeug in dem Autopilotstreckenabschnitt automatisch steuern. Die Verarbeitungsvorrichtung ist ferner ausgestaltet, einen Abstand zwischen einer aktuellen Position des Fahrzeugs und dem Beginn des Autopilotstreckenabschnitts zu bestimmen, und den Abstand auf der Ausgabevorrichtung auszugeben. Die Verarbeitungsvorrichtung ist ausgestaltet, den Abstand als ein Ringsymbol auszugeben, welches ein gefärbtes oder markiertes Ringsegment aufweist, dessen Ausdehnung in Abhängigkeit von dem Abstand zwischen der aktuellen Position des Fahrzeugs und dem Beginn des Autopilotstreckenabschnitts eingestellt wird. Das Fahrerassistenzsystem ist somit zur Durchführung des zuvor beschriebenen Verfahrens und seiner Ausführungsformen geeignet und umfasst daher auch die zuvor beschriebenen Vorteile.

Gemäß der vorliegenden Erfindung wird weiterhin ein Fahrzeug bereitgestellt, welches das zuvor beschriebene Fahrerassistenzsystem umfasst und somit in der Lage ist, zumindest teilweise automatisch gesteuert zu werden.

Die vorliegende Erfindung wird nachfolgend unter Bezugnahme auf die beigefügte Zeichnung im Detail beschrieben werden. Die vorliegende Erfindung ist allgemein durch die unabhängigen Ansprüche definiert. Die nachfolgende Beschreibung bezieht sich auf beispielhafte Ausführungsformen.
Fig. 1 zeigt schematisch ein Fahrzeug gemäß einer Ausführungsform der vorliegenden Erfindung.
Fig. 2 zeigt schematisch eine Innenraumansicht des Fahrzeugs der Fig. 1.
Fig. 3 zeigt Verfahrensschritte eines Verfahrens gemäß einer Ausführungsform der vorliegenden Erfindung.
Fig. 4 zeigt eine Ausgabe auf einer Anzeige in einem Kombiinstrument gemäß einer Ausführungsform der vorliegenden Erfindung.
Fig. 5 zeigt eine weitere Ausgabe auf der Anzeige in dem Kombiinstrument gemäß einer Ausführungsform der vorliegenden Erfindung.
Fig. 6 zeigt eine Ausgabe auf einer Anzeige in einem Armaturenbrett des Fahrzeugs.
Fig. 7 zeigt eine weitere Ausgabe auf der Anzeige in dem Armaturenbrett.
Fig. 8 zeigt noch eine weitere Ausgabe auf der Anzeige in dem Kombiinstrument.

Fig. 1 zeigt ein Fahrzeug 10 mit einem Fahrerassistenzsystem 11. Das Fahrzeug 10 umfasst weiterhin ein Lenkrad 12 und einen Fahrersitz 13. Das Fahrerassistenzsystem 11 umfasst eine Steuervorrichtung 14, eine erste Anzeigevorrichtung 15 und eine zweite Anzeigevorrichtung 16. Die Verarbeitungsvorrichtung 14 ist mit der ersten und zweiten Anzeigevorrichtung 15, 16 und dem Lenkrad 12 gekoppelt. Die erste Anzeigevorrichtung 15 ist beispielsweise in einem Kombiinstrument angeordnet, welches aus Sicht eines auf dem Fahrersitz 13 sitzenden Fahrers hinter dem Lenkrad 12 angeordnet ist. Die zweite Anzeigevorrichtung 16 ist beispielsweise näherungsweise mittig in Fahrzeugquerrichtung in einem Armaturenbrett 18 des Fahrzeugs 10 angeordnet. Das Fahrerassistenzsystem 11 ist in der Lage, das Fahrzeug 10 zumindest teilweise automatisch zu steuern, beispielsweise indem das Fahrerassistenzsystem 14 sowohl eine Querführung als auch eine Längsführung des Fahrzeugs 10 entlang einiger Streckenabschnitte einer Fahrtroute steuert. Dadurch ist das Fahrerassistenzsystem 11 in der Lage, das Fahrzeug 10 ohne Aktivität eines Fahrers zumindest in bestimmten Situationen zu steuern. Die Funktionalität des Fahrerassistenzsystems 11 zum automatischen Steuern des Fahrzeugs 10 wird nachfolgend als Autopilotfunktion bezeichnet werden. Die Autopilotfunktion kann beispielsweise durch Betätigen von entsprechenden Bedienelementen an dem Lenkrad 12 aktiviert oder deaktiviert werden. Ferner kann die Autopilotfunktion aktiviert werden, indem das Lenkrad 12 manuell von dem Fahrer in Richtung Armaturenbrett 18 weggeschoben wird und die Autopilotfunktion kann deaktiviert werden, indem das Lenkrad 12 manuell von dem Fahrer wieder von dem Armaturenbrett 18 weg zu sich hingezogen wird. Diese Bewegung des Lenkrads 12 wird in den Fig. 1 und 2 durch den Pfeil 19 verdeutlicht.

Fig. 2 zeigt schematisch eine Perspektivansicht eines Innenraums des Fahrzeugs 10. Das Lenkrad 12 ist wie zuvor beschrieben durch Bewegen des Lenkrads 12 in Richtung des Pfeils 19 wahlweise in eine erste Position 21 oder eine zweite Position 22 bewegbar, um die Autopilotfunktion des Fahrerassistenzsystems 11 zu deaktivieren bzw. zu aktivieren. Weiterhin sind in Fig. 2 die erste Anzeigevorrichtung 15 und die zweite Anzeigevorrichtung 16 gezeigt. Die erste Anzeigevorrichtung 15 kann, wie zuvor beschrieben, beispielsweise als Anzeige in einem so genannten frei programmierbaren Kombidisplay realisiert werden. Darüber hinaus kann die erste Anzeigevorrichtung 15 auch eine in eine Windschutzscheibe des Fahrzeugs eingeblendete Anzeige, ein so genanntes Headup-Display, umfassen.

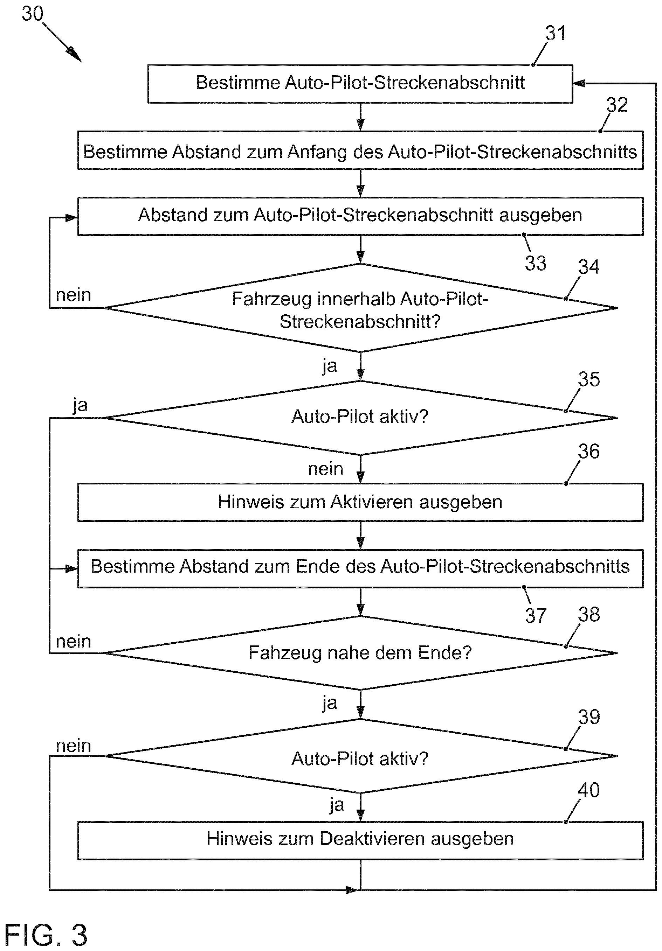

Die Arbeitsweise des Fahrerassistenzsystems 11 in Verbindung mit den Anzeigevorrichtungen 15, 16 wird nachfolgend in Verbindung mit den Figuren 3-8 im Detail beschrieben werden.

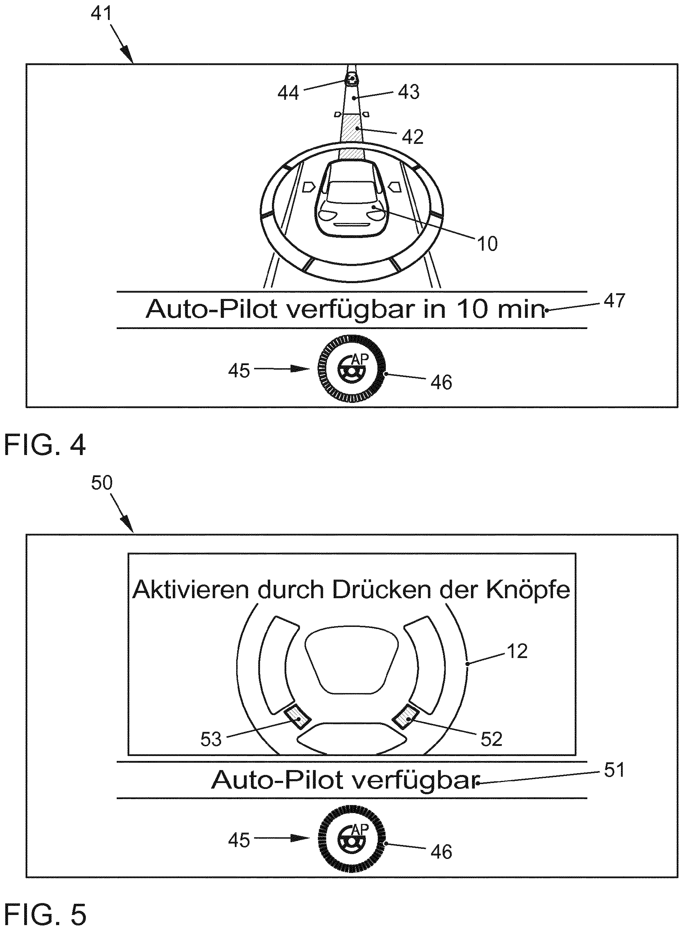

Fig. 3 zeigt Verfahrensschritte 31-40 eines Verfahrens 30, welche von der Verarbeitungsvorrichtung 14 ausgeführt werden. Das Verfahren geht von einem manuellen Fahrbetrieb aus, d.h., das Fahrzeug 10 wird manuell von einem Fahrer des Fahrzeugs 10 geführt. Ein Navigationssystem des Fahrzeugs 10 hat beispielsweise eine Route zu einem Ziel bestimmt oder eine voraussichtliche Fahrstrecke des Fahrzeugs 10 auf eine beliebige andere Art und Weise bestimmt. Auf der ersten Anzeigevorrichtung 15 in dem Kombiinstrument oder in dem Headup-Display werden normale Informationen für den Fahrer, beispielsweise eine Geschwindigkeit des Fahrzeugs, ein Tankfüllstand, eine aktuelle Motordrehzahl usw. dargestellt. Bereits während dieser manuellen Fahrt werden zusätzlich Informationen für eine zukünftige Autopilotfahrt angezeigt. Dazu wird im Schritt 31 ein Autopilotstreckenabschnitt bestimmt, entlang welchem das Fahrerassistenzsystem 11 voraussichtlich in der Lage ist, das Fahrzeug 10 automatisch zu steuern. Im Schritt 32 wird ausgehend von einer aktuellen Position des Fahrzeugs 10 ein Abstand zu dem Anfang dieses Autopilotstreckenabschnitts bestimmt. Dieser Abstand zum Beginn des Autopilotstreckenabschnitts wird im Schritt 33 auf der ersten Anzeigevorrichtung 15 ausgegeben. Fig. 4 zeigt eine derartige Ausgabe 41 des Schritts 33.

In Fig. 4 wird der Abstand zum Autopilotstreckenabschnitt in der Ausgabe 41 auf verschiedene Arten und Weisen dargestellt. Zum einen wird das Fahrzeug 10 schematisch in Fahrtrichtung dargestellt und ein zukünftiger Streckenverlauf zu einem vorausfahrenden Fahrzeug 44 angezeigt, welcher in einen ersten Anteil 42 bis zu dem Anfang des Autopilotstreckenabschnitts und einen zweiten Anteil 43, welcher den Autopilotstreckenabschnitt darstellt, unterteilt ist.

Während einer Fahrt des Fahrzeugs 10 verkürzt sich somit zunehmend der erste Anteil 42, bis der Anfang des Autopilotstreckenabschnitts 43 erreicht ist. Zusätzlich wird auf der Ausgabe 41 eine textuelle Ausgabe 47 bereitgestellt, in welcher unter Berücksichtigung von beispielsweise üblichen Verkehrsverhältnissen die Zeit bis zum Erreichen des Anfangs des Autopilotstreckenabschnitts 43 angezeigt wird. In dem in Fig. 4 gezeigten Beispiel ist die Autopilotfunktion in 10 Minuten verfügbar. Schließlich wird auf der Ausgabe 41 ein Ringsymbol 45 dargestellt, welches ein gefärbtes oder markiertes Ringsegment 46 aufweist, welches in Abhängigkeit von der Annäherung an den Anfang des Autopilotstreckenabschnitts 43 vergrößert wird, bis der Autopilotstreckenabschnitt erreicht ist und das Ringsegment 46 den gesamten Ring einnimmt.

Der abstrahierte Streckenverlauf 42, 43 deutet somit schematisch an, ab welcher Streckenposition die Autopilotfunktion aktiviert werden kann. Sowohl die textuelle Darstellung 47 als auch die symbolische Darstellung 45 verdeutlichen, wie lange noch manuell gefahren werden muss. Dabei kann die prognostizierte Verfügbarkeitsdarstellung auf streckenbasierten Daten beruhen, um eine allzu häufige Anpassung im Fahrtverlauf zu vermeiden. Der erste Abschnitt 42 kann eine andere Farbe aufweisen als der zweite Abschnitt 43. Sobald die Autopilotfunktion verfügbar ist, ist somit die gesamte Strecke vor dem Fahrzeug 10 in der Farbe des zweiten Abschnitts 43, was eine Verfügbarkeit der Autopilotfunktion anzeigt. Parallel dazu kann beispielsweise das Symbol 45 eine entsprechende Farbe annehmen.

Im Schritt 34 des Verfahrens 30 der Fig. 3 wird überprüft, ob sich das Fahrzeug am Beginn des Autopilotstreckenabschnitts oder sogar bereits innerhalb des Autopilotstreckenabschnitts befindet. Solange dies nicht der Fall ist, wird im Schritt 33 der Abstand bis zum Beginn des Autopilotstreckenabschnitts auf der Anzeigevorrichtung 14 aktualisiert ausgegeben. Sobald das Fahrzeug den Autopilotstreckenabschnitt erreicht hat, wird das Verfahren im Schritt 35 fortgesetzt. Dort wird überprüft, ob der Fahrer die Autopilotfunktion durch eine entsprechende Betätigung von beispielsweise entsprechenden Bedienelementen an dem Lenkrad 12 oder durch eine Verschiebung des Lenkrads 12 aktiviert oder nicht. Wenn die Autopilotfunktion nicht aktiviert wird, wird im Schritt 36 ein Hinweis zum Aktivieren der Autopilotfunktion ausgegeben. Eine derartige Ausgabe ist in Fig. 5 dargestellt.

Die Ausgabe 50 der Fig. 5 zeigt zum einen mithilfe des Schriftzugs 51 an, dass die Autopilotfunktion verfügbar ist. Ferner wird mithilfe des Symbols 45 angezeigt, dass die Autopilotfunktion verfügbar ist. Schließlich wird das Lenkrad 12 mit Bedienelementen 52 und 53 und einem Hinweis, dass der Autopilot durch Drücken der Bedienelemente 52, 53 aktiviert werden kann, dargestellt.

Sollte der Fahrer versuchen, die Autopilotfunktion zu aktivieren, bevor sich das Fahrzeug innerhalb des Autopilotstreckenabschnittes befindet, so kann dies mit einer entsprechenden Anzeige, dass die Autopilotfunktion noch nicht verfügbar ist, auf der Ausgabevorrichtung 14 verdeutlicht werden.

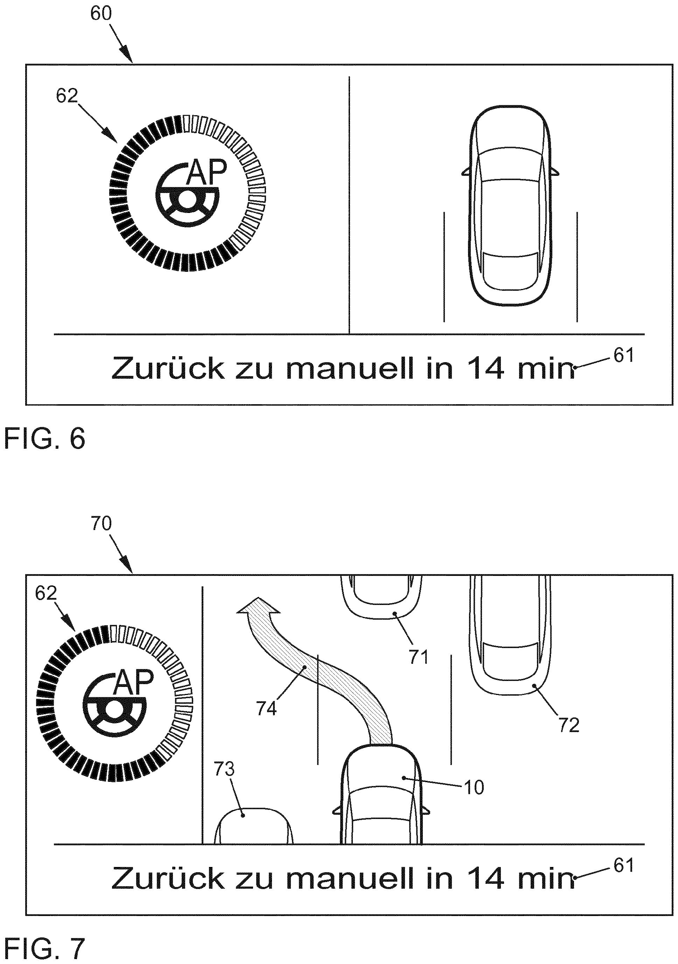

Wenn der Fahrer die Autopilotfunktion aktiviert hat, kann dies durch eine entsprechende Ausgabe auf der ersten Anzeigevorrichtung 15, beispielsweise durch eine farbliche Änderung des Symbols 45, bestätigt werden. Zusätzlich wird auf der zweiten Anzeigevorrichtung 16 eine Ausgabe 70 mit detaillierteren Informationen über die Autopilotfunktion bereitgestellt. Beispielsweise kann, wie in Fig. 7 dargestellt ist, ein zukünftiges Fahrmanöver 74 des Fahrzeugs 10, beispielsweise ein Spurwechsel, dargestellt werden. Die zukünftigen Fahrmanöver betreffen neben der in Fig. 7 gezeigten geplanten Querführung auch geplante starke Änderungen der Längsführung, wie z.B. Beschleunigen und Bremsen. Zur Vervollständigung der Umgebungsinformationen können auf der zweiten Anzeigevorrichtung 16 auch in abstrahierter Art und Weise andere Verkehrsteilnehmer 71-73, beispielsweise Fahrzeuge, Fußgänger und Radfahrer, dargestellt werden. Um deren Relevanz für die eigene Fahrt anzuzeigen, können diese Objekte auch mit ihrer geschätzten Bewegungstrajektorie dargestellt werden, beispielsweise indem eine Richtung angezeigt wird, in welcher sich ein Fahrzeug oder ein Fußgänger bewegt. Das eigene Fahrzeug 10 wird hervorgehoben dargestellt, beispielsweise in einer Farbe, welche auch zur Darstellung des Autopilotsymbols 45 der Fig. 5 verwendet wird, um die Aktivität der Autopilotfunktion zu verdeutlichen.

Während die Autopilotfunktion aktiv ist, wird im Schritt 37 der Fig. 3 ein Abstand zum Ende des Autopilotstreckenabschnitts bestimmt. Dieser Abstand kann in Ausgaben 60, 70, wie sie in Fig. 6 und 7 gezeigt sind, als Textausgabe 61 oder als ein graphisches Symbol 62 bereitgestellt werden. So wird der Fahrer stets über die Dauer der pilotierten Fahrt informiert. Dadurch kann der Fahrer abschätzen, welche Tätigkeiten er während der pilotierten Fahrt durchführen kann, beispielsweise Telefonieren oder elektronische Nachrichten lesen oder verfassen.

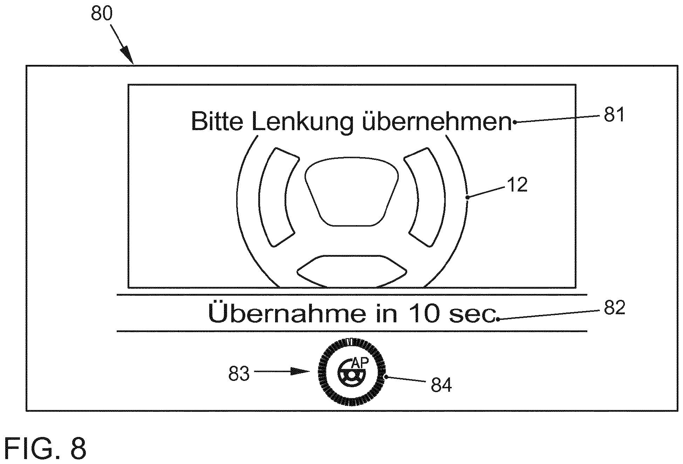

Im Schritt 38 wird überprüft, ob sich das Fahrzeug dem Ende des Autopilotstreckenabschnitts nähert. Wenn das Ende des Autopilotstreckenabschnitts in beispielsweise weniger als 10-30 Sekunden erreicht werden wird oder nur noch wenige 100 Meter entfernt ist, wird im Schritt 39 überprüft, ob die Autopilotfunktion noch aktiv ist. Wenn die Autopilotfunktion noch aktiv ist, wird im Schritt 40 ein Hinweis zum Deaktivieren ausgegeben. Eine entsprechende Ausgabe 80 ist in Fig. 8 dargestellt. Der Hinweis zum Deaktivieren kann sowohl eine textuelle Ausgabe 82 als auch eine symbolische Ausgabe 83 umfassen. In der textuellen Ausgabe 82 wird die Zeit bis zu einer erforderlichen Übernahme beispielsweise in Sekunden heruntergezählt. In der symbolischen Darstellung 83 wird ein Ringsegment 84 in Abhängigkeit von der verbleibenden Zeit oder Strecke zum Ende des Autopilotstreckenabschnitts verändert. Zusätzlich kann ein Lenkrad 12 zusammen mit einer Aufforderung 81 (bitte Lenkung übernehmen) angezeigt werden. Zusätzliche akustische Ausgaben sind ebenso möglich. Die Ausgabe 80 kann beispielsweise auf der ersten Anzeigevorrichtung 15 ausgegeben werden und beispielsweise bei Unterschreiten einer vorgegebenen Zeit zur Übernahme zusätzlich auf der zweiten Anzeigevorrichtung 16 ausgegeben werden, um dem Fahrer die Dringlichkeit der Fahrzeugübernahme zu verdeutlichen.

Auf der zweiten Anzeigevorrichtung 16 können, wenn die Autopilotfunktion aktiv ist, weitere Hinweise in textueller oder graphischer Form ausgegeben werden. Wenn der Fahrer beispielsweise während einer Fahrt mit aktivierter Autopilotfunktion den Sicherheitsgurt löst, kann eine entsprechende Warnung ausgegeben werden, dass der Fahrer den Sicherheitsgurt wieder schließen soll, da sonst die Autopilotfunktion nach einer vorgegebenen Zeit deaktiviert werden wird und das Fahrzeug dann entweder von dem Fahrer manuell zu steuern ist oder automatisch zum Stillstand gebracht wird. Ferner kann, wenn der Fahrer eine nicht interpretierbare Aktion zeigt, z.B. leichte Lenkbewegungen an dem Lenkrad 12 durchführt, ein Hinweis ausgegeben werden, wie die Autopilotfunktion ausgeschaltet werden kann, falls dies von dem Fahrer gewünscht wird.

Das zuvor beschriebene Verfahren bietet eine große Transparenz hinsichtlich der Verfügbarkeit der Autopilotfunktion. Sowohl die zukünftige Verfügbarkeit als auch die Dauer der Verfügbarkeit der Autopilotfunktion werden durch Streckendaten prognostiziert. Für den Fahrer hat dies den Vorteil, dass er dadurch einschätzen kann, wie lange und welchen Nebentätigkeiten er sich während der nächsten aktiven Phase der Autopilotfunktion widmen kann. Durch die Darstellung der Umgebungsinformationen kann ein angemessenes Vertrauen bei dem Fahrer und den Passagieren geweckt werden und dem Fahrer die aktuelle Situation in der Umgebung des Fahrzeugs im Falle einer Rückholung der Fahrverantwortung zu dem Fahrer bereitgestellt werden. Die zusätzlichen Hinweise und Erläuterungen in sowohl textueller als auch symbolischer Form zur Aktivierung und Deaktivierung der Autopilotfunktion erleichtern den Umgang mit dieser neuartigen Technologie.

Die zweite Anzeigevorrichtung 16 kann beispielsweise eine berührungssensitive Oberfläche umfassen und als so genannter Touchscreen ausgebildet sein. Die berührungssensitive Oberfläche kann dazu verwendet werden, die angezeigten Informationen benutzerindividuell zu konfigurieren. Dadurch kann eine gewünschte Informationsdichte auf der zweiten Anzeigevorrichtung 16 eingestellt werden. Beispielsweise können die in Fig. 7 gezeigten detaillierten Umgebungsinformationen nur bei Bedarf zugeschaltet werden. Die Anordnung der ersten Anzeigevorrichtung 15 und der zweiten Anzeigevorrichtung 16, wie es zuvor in den Figuren 1 und 2 gezeigt wurde, ist nur exemplarisch. Beispielsweise kann eine gemeinsame große Anzeigevorrichtung verwendet werden, worin ein bestimmter Teil für die Darstellung der Autopilotfunktionalität reserviert ist. Bei getrennten Anzeigevorrichtungen kann die zweite Anzeigevorrichtung 16 beispielsweise automatisch mechanisch verstellbar sein und in dem Armaturenbrett 18 versenkbar sein. Die Verfügbarkeit der Autopilotfunktion kann in diesem Fall durch ein mechanisches Einfahren der zweiten Anzeigevorrichtung 16 symbolisiert werden. Je weniger Zeit in dem Autopilotstreckenabschnitt verbleibt, umso weiter fährt die zweite Anzeigevorrichtung 16 in das Armaturenbrett 18 ein.

### Bezugszeichenliste

10 Fahrzeug
11 Fahrerassistenzsystem
12 Lenkrad
13 Fahrersitz
14 Verarbeitungsvorrichtung
15 erste Anzeigevorrichtung
16 zweite Anzeigevorrichtung
18 Armaturenbrett
19 Pfeil
21 erste Position
22 zweite Position
30 Verfahren
31-40 Schritt
41 Ausgabe
42 Streckenabschnitt
43 Autopilotstreckenabschnitt
44 vorausfahrendes Fahrzeug
45 Symbol
46 Ringsegment
47 textuelle Ausgabe
50 Ausgabe
51 textuelle Ausgabe
52, 53 Bedienelement
60 Ausgabe
61 textuelle Ausgabe
62 Symbol
70 Ausgabe
71-73 Fahrzeug
74 Fahrmanöver
80 Ausgabe
81 Hinweis
82 textuelle Ausgabe
83 Symbol
84 Ringsegment

## Patentansprüche

1. Verfahren für ein Fahrerassistenzsystem eines Fahrzeugs, wobei das Fahrerassistenzsystem (11) in der Lage ist, das Fahrzeug (10) zumindest teilweise automatisch zu steuern, wobei das Verfahren umfasst:
- Bestimmen eines Beginn eines Autopilotstreckenabschnitts (43) in einem für das Fahrzeug (10) geplanten Streckenverlauf, wobei das Fahrerassistenzsystem (11) in der Lage ist, das Fahrzeug (10) in dem Autopilotstreckenabschnitt (43) automatisch zu steuern,
- Bestimmen eines Abstands zwischen einer aktuellen Position des Fahrzeugs (10) und dem Beginn des Autopilotstreckenabschnitts (43), und
- Ausgeben des Abstands in dem Fahrzeug (10),
**dadurch gekennzeichnet, dass** das Ausgeben des Abstands ein Ausgeben eines Ringsymbols (45) umfasst, welches ein gefärbtes oder markiertes Ringsegment (46) aufweist, dessen Ausdehnung in Abhängigkeit von dem Abstand zwischen der aktuellen Position des Fahrzeugs (10) und dem Beginn des Autopilotstreckenabschnitts (43) eingestellt wird.

2. Verfahren nach Anspruch 1, **dadurch gekennzeichnet, dass** das Ausgeben des Abstands zusätzlich umfasst:
- Ausgeben des Abstands in Textform, und/oder
- Bestimmen einer voraussichtlichen Fahrzeit zu dem Beginn des Autopilotstreckenabschnitts (43) in Abhängigkeit von dem Abstand und Ausgeben der voraussichtlichen Fahrzeit zu dem Beginn des Autopilotstreckenabschnitts (43) in Textform (47), und/oder
- Ausgeben einer grafischen Darstellung (42, 43) des geplanten Streckenverlaufs, wobei der Abstand (42) in der grafischen Darstellung markiert ist.

3. Verfahren nach Anspruch 1 oder 2, **dadurch gekennzeichnet, dass** das Verfahren ferner umfasst:
- Bestimmen einer Länge des Autopilotstreckenabschnitts (43), und
- Ausgeben der Länge des Autopilotstreckenabschnitts (43).

4. Verfahren nach Anspruch 3, **dadurch gekennzeichnet, dass** das Ausgeben der Länge des Autopilotstreckenabschnitts (43) umfasst:
- Ausgeben der Länge in Textform, und/oder
- Bestimmen einer voraussichtlichen Autopilotfahrzeit in Abhängigkeit von der Länge des Autopilotstreckenabschnitts (43) und Ausgeben der voraussichtlichen Autopilotfahrzeit in Textform (61), und/oder
- Ausgeben eines Symbols (62), wobei eine Ausdehnung des Symbols (62) in Abhängigkeit der Länge des Autopilotstreckenabschnitts (43) oder der voraussichtlichen Autopilotfahrzeit eingestellt wird, und/oder
- Ausgeben einer grafischen Darstellung des geplanten Streckenverlaufs, wobei der Autopilotstreckenabschnitt (43) in der grafischen Darstellung markiert ist.

5. Verfahren nach Anspruch 3 oder 4, wobei das Fahrerassistenzsystem (11) eine Autopilotfunktion aufweist, welche zum automatischen Steuern des Fahrzeugs (10) entlang dem Autopilotstreckenabschnitt (43) aktivierbar ist, **dadurch gekennzeichnet, dass** die Länge des Autopilotstreckenabschnitts (43) in Abhängigkeit eines Aktivierungszustands der Autopilotfunktion auf einer ersten Anzeigevorrichtung (15) in dem Fahrzeug (10) oder auf einer zweiten Anzeigevorrichtung (16) in dem Fahrzeug (10) ausgegeben wird.

6. Verfahren nach einem der vorhergehenden Ansprüche, **dadurch gekennzeichnet, dass** das Verfahren ferner umfasst:
- Darstellen eines zukünftigen Fahrmanövers (74), welches von dem Fahrerassistenzsystem (11) zum automatischen Steuern des Fahrzeugs (10) geplant wurde, auf einer Anzeigevorrichtung (16) des Fahrzeugs.

7. Verfahren nach einem der vorhergehenden Ansprüche, **dadurch gekennzeichnet, dass** das Verfahren ferner umfasst:
- Bestimmen einer Verkehrssituation (71-73) rund um das Fahrzeug (10), wie sie von dem Fahrerassistenzsystem (11) zum automatischen Steuern des Fahrzeugs (10) erfasst wurde, und
- Darstellen der Verkehrssituation (71-73) auf einer Anzeigevorrichtung (16) des Fahrzeugs (10).

8. Verfahren nach Anspruch 5 und nach einem der Ansprüche 6 oder 7, **dadurch gekennzeichnet, dass** das zukünftige Fahrmanöver (74) oder die Verkehrssituation (71-73) rund um das Fahrzeug (10) in Abhängigkeit des Aktivierungszustands der Autopilotfunktion auf der ersten Anzeigevorrichtung (15) oder auf der zweiten Anzeigevorrichtung (16) ausgegeben wird.

9. Verfahren nach Anspruch 5 oder 8, **dadurch gekennzeichnet, dass** die erste Anzeigevorrichtung (15) in einem Kombiinstrument in einem Bereich hinter einem Lenkrad (12) des Fahrzeugs (10) angeordnet ist, und dass die zweite Anzeigevorrichtung (16) in einem in Fahrzeugquerrichtung mittleren Bereich eines Armaturenbretts (18) des Fahrzeugs (10) angeordnet ist.

10. Verfahren nach einem der vorhergehenden Ansprüche, wobei das Fahrerassistenzsystem (11) eine Autopilotfunktion aufweist, welche zum automatischen Steuern des Fahrzeugs (10) entlang dem Autopilotstreckenabschnitt (43) von einem Fahrer des Fahrzeugs (10) aktivierbar ist,
**dadurch gekennzeichnet, dass** das Verfahren ferner umfasst:
- Bestimmen, ob sich das Fahrzeug (10) auf dem Autopilotstreckenabschnitt (43) befindet, und
- wenn sich das Fahrzeug (10) auf dem Autopilotstreckenabschnitt (43) befindet und die Autopilotfunktion nicht aktiviert ist, Ausgeben eines Hinweises (50), wie die Autopilotfunktion aktiviert werden kann.

11. Verfahren nach einem der vorhergehenden Ansprüche, wobei das Fahrerassistenzsystem (11) eine Autopilotfunktion aufweist, welche zum automatischen Steuern des Fahrzeugs (10) entlang dem Autopilotstreckenabschnitt (43) aktivierbar ist, und wobei die Autopilotfunktion von einem Fahrer des Fahrzeugs (10) deaktivierbar ist,
**dadurch gekennzeichnet, dass** das Verfahren ferner umfasst:
- Bestimmen eines Endes des Autopilotstreckenabschnitts (43) in dem für das Fahrzeug (10) geplanten Streckenverlauf,
- Bestimmen eines Abstands zwischen der aktuellen Position des Fahrzeugs (10) und dem Ende des Autopilotstreckenabschnitts (43), und
- Ausgeben eines Hinweises (80), die Autopilotfunktion zu deaktivieren, in Abhängigkeit von dem Abstand zwischen der aktuellen Position des Fahrzeugs (10) und dem Ende des Autopilotstreckenabschnitts (43).

12. Fahrerassistenzsystem für ein Fahrzeug, wobei das Fahrerassistenzsystem (11) in der Lage ist, das Fahrzeug (10) zumindest teilweise automatisch zu steuern, wobei das Fahrerassistenzsystem (11) umfasst:
- eine Ausgabevorrichtung (15, 16), und
- eine Verarbeitungsvorrichtung (14), welche ausgestaltet ist,
einen Beginn eines Autopilotstreckenabschnitts (43) in einem für das Fahrzeug (10) geplanten Streckenverlauf zu bestimmen, wobei das Fahrerassistenzsystem (11) in der Lage ist, das Fahrzeug (10) in dem Autopilotstreckenabschnitt (43) automatisch zu steuern,
einen Abstand zwischen einer aktuellen Position des Fahrzeugs (10) und dem Beginn des Autopilotstreckenabschnitts (43) zu bestimmen, und
den Abstand auf der Ausgabevorrichtung (15, 16) auszugeben,
**dadurch gekennzeichnet, dass** die Verarbeitungsvorrichtung (14) ausgestaltet ist, den Abstand als ein Ringsymbol (45) auszugeben, welches ein gefärbtes oder markiertes Ringsegment (46) aufweist, dessen Ausdehnung in Abhängigkeit von dem Abstand zwischen der aktuellen Position des Fahrzeugs (10) und dem Beginn des Autopilotstreckenabschnitts (43) eingestellt wird.

13. Fahrerassistenzsystem nach Anspruch 12, **dadurch gekennzeichnet, dass** das Fahrerassistenzsystem (11) zur Durchführung des Verfahrens nach einem der Ansprüche 1-11 ausgestaltet ist.

## Claims

1. Method for a driver assistance system of a vehicle, wherein the driver assistance system (11) is capable of automatically controlling the vehicle (10) at least partially, wherein the method comprises:
- determining a beginning of an autopilot section (43) in a route planned for the vehicle (10), wherein the driver assistance system (11) is capable of automatically controlling the vehicle (10) in the autopilot section (43),
- determining a distance between a current position of the vehicle (10) and the beginning of the autopilot section (43), and
- outputting the distance in the vehicle (10),
**characterized in that** the output of the distance comprises an output of a ring symbol (45) which has a colored or marked ring segment (46), the extent of which is adjusted as a function of the distance between the current position of the vehicle (10) and the beginning of the autopilot section (43).

2. Method according to claim 1, **characterized in that** the output of the distance additionally comprises:
- outputting the distance in text form, and/or
- determining an expected driving time to the beginning of the autopilot section (43) as a function of the distance and outputting the expected driving time to the beginning of the autopilot section (43) in text form (47), and/or
- outputting a graphic representation (42, 43) of the planned route, wherein the distance (42) is marked in the graphic representation.

3. Method according to claim 1 or 2, **characterized in that** the method furthermore comprises:
- determining a length of the autopilot section (43), and
- outputting the length of the autopilot section (43).

4. Method according to claim 3, **characterized in that** outputting the length of the autopilot section (43) comprises:
- outputting the length in text form, and/or
- determining an expected autopilot driving time as a function of the length of the autopilot section (43) and outputting the expected autopilot driving time in text form (61), and/or
- outputting a symbol (62), wherein an extent of the symbol (62) is adjusted as a function of the length of the autopilot section (43) or the expected autopilot driving time, and/or
- outputting a graphic representation of the planned route, wherein the autopilot section (43) is marked in the graphic representation.

5. Method according to claim 3 or 4, wherein the driver assistance system (11) comprises an autopilot function which can be activated for automatically controlling the vehicle (10) along the autopilot section (43), **characterized in that** the length of the autopilot section (43) is output as a function of the activation state of the autopilot function on a first display device (15) in the vehicle (10) or on a second display device (16) in the vehicle (10).

6. Method according to any one of the preceding claims, **characterized in that** the method furthermore comprises:
- representing on a display device (16) of the vehicle a future driving maneuver (74) planned by the driver assistance system (11) for automatically controlling the vehicle (10).

7. Method according to any one of the preceding claims, **characterized in that** the method furthermore comprises:
- determining a traffic situation (71-73) around the vehicle (10) as detected by the driver assistance system (11) for automatically controlling the vehicle (10), and
- displaying the traffic situation (71-73) on a display device (16) of the vehicle (10).

8. Method according to claim 5 and according to any one of claims 6 or 7, **characterized in that** the future driving maneuver (74) or the traffic situation (71-73) around the vehicle (10) is output as a function of the activation state of the autopilot function on the first display device (15) or on the second display device (16).

9. Method according to claim 5 or 8, **characterized in that** the first display device (15) is arranged in a combination instrument in a region behind a steering wheel (12) of the vehicle (10) and that the second display device (16) is arranged in a central region of an instrument panel (18) of the vehicle (10) in the vehicle transverse direction.

10. Method according to any one of the preceding claims, wherein the driver assistance system (11) has an autopilot function which can be activated by a driver of the vehicle (10) for automatically controlling the vehicle (10) along the autopilot section (43),
**characterized in that** the method furthermore comprises:
- determining whether the vehicle (10) is located in the autopilot section (43), and
- if the vehicle (10) is located in the autopilot section (43) and the autopilot function is not activated, outputting an indication (50) as to how the autopilot function can be activated.

11. Method according to any one of the preceding claims, wherein the driver assistance system (11) has an autopilot function which can be activated for automatically controlling the vehicle (10) along the autopilot section (43), and wherein the autopilot function can be deactivated by a driver of the vehicle (10),
**characterized in that** the method furthermore comprises:
- determining an end of the autopilot section (43) in the route planned for the vehicle (10),
- determining a distance between the current position of the vehicle (10) and the end of the autopilot section (43), and
- outputting an indication (80) about deactivating the autopilot function as a function of the distance between the current position of the vehicle (10) and the end of the autopilot section (43).

12. Driver assistance system for a vehicle, wherein the driver assistance system (11) is capable of automatically controlling the vehicle (10) at least partially, wherein the driver assistance system (11) comprises:
- an output device (15, 16), and
- a processing device (14) configured to
determine a beginning of an autopilot section (43) in a route planned for the vehicle (10), wherein the driver assistance system (11) is capable of automatically controlling the vehicle (10) in the autopilot section (43),
determine a distance between a current position of the vehicle (10) and the beginning of the autopilot section (43), and
output the distance on the output device (15, 16),
**characterized in that** the processing device (14) is designed to output the distance as a ring symbol (45) which has a colored or marked ring segment (46), the extent of which is adjusted as a function of the distance between the current position of the vehicle (10) and the beginning of the autopilot section (43).

13. Driver assistance system according to claim 12, **characterized in that** the driver assistance system (11) is designed to carry out the method according to any one of claims 1 to 11.

## Revendications

1. Procédé pour un système d'aide à la conduite d'un véhicule, le système d'aide à la conduite (11) étant en mesure de commander le véhicule (10) de manière au moins partiellement automatique, le procédé comprenant :
- la détermination d'un début d'un tronçon de pilotage automatique (43) sur un parcours prévu pour le véhicule (10), le système d'aide à la conduite (11) étant en mesure de commander le véhicule (10) automatiquement sur le tronçon de pilotage automatique (43),
- la détermination d'une distance entre une position actuelle du véhicule (10) et le début du tronçon de pilotage automatique (43) et
- l'émission de la distance dans le véhicule (10),
**caractérisé en ce que** l'émission de la distance comprend une émission d'un symbole annulaire (45), qui présente un segment annulaire coloré ou portant un repère (46), dont l'étendue est réglée en fonction de la distance entre la position actuelle du véhicule (10) et le début du tronçon de pilotage automatique (43).

2. Procédé selon la revendication 1, **caractérisé en ce que** l'émission de la distance comprend en outre :
- l'émission de la distance sous forme de texte et/ou
- la détermination d'un temps de parcours probable jusqu'au début du tronçon de pilotage automatique (43) en fonction de la distance et l'émission du temps de parcours probable jusqu'au début du tronçon de pilotage automatique (43) sous forme de texte (47) et/ou
- l'émission d'une représentation graphique (42, 43) du parcours prévu, la distance (42) portant un repère dans la représentation graphique.

3. Procédé selon la revendication 1 ou 2, **caractérisé en ce que** le procédé comprend en outre :
- la détermination d'une longueur du tronçon de pilotage automatique (43) et
- l'émission de la longueur du tronçon de pilotage automatique (43).

4. Procédé selon la revendication 3, **caractérisé en ce que** l'émission de la longueur du tronçon de pilotage automatique (43) comprend :
- l'émission de la longueur sous forme de texte et/ou
- la détermination d'un temps de parcours probable en pilotage automatique en fonction de la longueur du tronçon de pilotage automatique (43) et l'émission du temps de parcours probable en pilotage automatique sous forme de texte (61) et/ou
- l'émission d'un symbole (62), une étendue du symbole (62) étant réglée en fonction de la longueur du tronçon de pilotage automatique (43) ou du temps de parcours probable en pilotage automatique et/ou
- l'émission d'une représentation graphique du parcours prévu, le tronçon de pilotage automatique (43) portant un repère dans la représentation graphique.

5. Procédé selon la revendication 3 ou 4, le système d'aide à la conduite (11) présentant une fonction de pilotage automatique, qui peut être activée pour la commande automatique du véhicule (10) le long du tronçon de pilotage automatique (43), **caractérisé en ce que** la longueur du tronçon de pilotage automatique (43) est émise en fonction d'un état d'activation de la fonction de pilotage automatique sur un premier dispositif d'affichage (15) dans le véhicule (10) ou sur un deuxième dispositif d'affichage (16) dans le véhicule (10).

6. Procédé selon l'une quelconque des revendications précédentes, **caractérisé en ce que** le procédé comprend en outre :
- la représentation d'une manœuvre de conduite future (74), qui est prévue par le système d'aide à la conduite (11) pour la commande automatique du véhicule (10), sur un dispositif d'affichage (16) du véhicule.

7. Procédé selon l'une quelconque des revendications précédentes, **caractérisé en ce que** le procédé comprend en outre :
- la détermination d'une situation de circulation (71-73) autour du véhicule (10), telle qu'elle a été détectée par le système d'aide à la conduite (11) pour la commande automatique du véhicule (10), et
- la représentation de la situation de circulation (71-73) sur un dispositif d'affichage (16) du véhicule (10).

8. Procédé selon la revendication 5 et selon l'une quelconque des revendications 6 ou 7, **caractérisé en ce que** la manœuvre de conduite future (74) ou la situation de circulation (71-73) autour du véhicule (10) sont émises en fonction de l'état d'activation de la fonction de pilotage automatique sur le premier dispositif d'affichage (15) ou sur le deuxième dispositif d'affichage (16).

9. Procédé selon la revendication 5 ou 8, **caractérisé en ce que** le premier dispositif d'affichage (15) est disposé dans un instrument combiné dans une zone derrière un volant de direction (12) du véhicule (10) et **en ce que** le deuxième dispositif d'affichage (16) est disposé dans une zone centrale d'un tableau de bord (18) dans la direction transversale du véhicule du véhicule (10).

10. Procédé selon l'une quelconque des revendications précédentes, le système d'aide à la conduite (11) présentant une fonction de pilotage automatique, qui peut être activée par un conducteur du véhicule (10) pour la commande automatique du véhicule (10) le long du tronçon de pilotage automatique (43),
**caractérisé en ce que** le procédé comprend en outre :
- la détermination si le véhicule (10) se trouve sur le tronçon de pilotage automatique (43) et
- lorsque le véhicule (10) se trouve sur le tronçon de pilotage automatique (43) et que la fonction de pilotage automatique n'est pas activée, l'émission d'une indication (50) sur la manière dont la fonction de pilotage automatique peut être activée.

11. Procédé selon l'une quelconque des revendications précédentes, le système d'aide à la conduite (11) présentant une fonction de pilotage automatique, qui peut être activée pour la commande automatique du véhicule (10) le long du tronçon de pilotage automatique (43) et la fonction de pilotage automatique pouvant être désactivée par un conducteur du véhicule (10),
**caractérisé en ce que** le procédé comprend en outre :
- la détermination d'une fin du tronçon de pilotage automatique (43) dans le parcours prévu pour le véhicule (10),
- la détermination d'une distance entre la position actuelle du véhicule (10) et la fin du tronçon de pilotage automatique (43) et
- l'émission d'une indication (80) de désactiver la fonction de pilotage automatique en fonction de la distance entre la position actuelle du véhicule (10) et la fin du tronçon de pilotage automatique (43).

12. Système d'aide à la conduite pour un véhicule, le système d'aide à la conduite (11) étant en mesure de commander le véhicule (10) de manière au moins partiellement automatique, le système d'aide à la conduite (11) comprenant :
- un dispositif d'émission (15, 16) et
- un dispositif de traitement (14), qui est conçu pour
déterminer un début d'un tronçon de pilotage automatique (43) sur un parcours prévu pour le véhicule (10), le système d'aide à la conduite (11) étant en mesure de commander le véhicule (10) automatiquement sur le tronçon de pilotage automatique (43),
déterminer une distance entre une position actuelle du véhicule (10) et le début du tronçon de pilotage automatique (43) et
émettre la distance sur le dispositif de sortie (15, 16),
**caractérisé en ce que** le dispositif de traitement (14) est conçu pour émettre la distance sous la forme d'un symbole annulaire (45), qui présente un segment annulaire coloré ou portant un repère (46), dont l'étendue est réglée en fonction de la distance entre la position actuelle du véhicule (10) et le début du tronçon de pilotage automatique (43).

13. Système d'aide à la conduite selon la revendication 12, **caractérisé en ce que** le système d'aide à la conduite (11) est conçu pour l'exécution du procédé selon l'une quelconque des revendications 1 à 11.
